# EUROPÄISCHE PATENTANMELDUNG

(11) **EP 0 750 095 A1**
(43) Veröffentlichungstag der Anmeldung: **27.12.1996**
(21) Anmeldenummer: 95870073.4
(22) Anmeldetag: 21.06.1995
(51) Int. Cl.: E21D 9/00, G01C 15/00

(54) **Vermessung und Steuerung einer Vortriebsvorrichtung bei Tunnelbauten**

(71) Anmelder: SMET-BORING N.V., B-2480 Dessel (BE)
(72) Erfinder: Winkel, Roland, 45134 Essen (DE); Smet, Wim, 2400 Mol (BE)
(74) Vertreter: Pieraerts, Jacques

(57) **Zusammenfassung**

Bei einem Verfahren zur automatischen Vermessung und Steuerung einer Vortriebsvorrichtung bei Tunnelbauten u. dgl., insbesondere im Rohrvortrieb, bei dem die räumliche Ist-Lage der Vortriebsvorrichtung (6) mittels eines Meßstrahls (19), der von einem als Ausgangsmeßstation (20) dienenden geodätischen Meßgerät ausgesandt und von einem als Zielpunkt (21) dienenden Zielreflektor an der Rückseite der Vortriebsvorrichtung (6) reflektiert wird, erfaßt und in einer elektronischen Rechenanlage mit der abgespeicherten räumlichen Soll-Lage der Vortriebsvorrichtung (6) verglichen wird, worauf in Abhängigkeit von der jeweiligen Abweichung entsprechende Steuersignale an die Vortriebsvorrichtung (6) zur Korrektur von deren Lageparameter abgegeben werden, wird derart vorgegangen, daß die Meßstrecke zwischen Ausgangsmeßstation (20) und Zielpunkt (21) durch Anordnung wenigstens einer Zwischenmeßstation (20-1, 20-2) in mehrere geradlinige Meßabschnitte unterteilt wird, um dadurch einen durchgehenden Meßpolygonzug (19, 19-1, 19-2) zu bilden, entlang dem der Meßstrahl zur kontinuierlichen Erfassung sämtlicher Lagedaten aller Stationen einschl. der Abstandsdaten von der Ausgangsmeßstation (20) über die Zwischenmeßstation(en) (20-1, 20-2) zum Zielpunkt (21) geleitet und von dort wieder zur Ausgangsmeßstation (20) reflektiert wird, so daß sämtliche erfaßten Ist-Daten in der zentralen Rechenanlage als Basis für die Ermittlung der Steuersignale an die Vortriebsvorrichtung (6) dienen, und daß während des laufenden Vortriebs die vorerwähnten Verfahrensschritte kontinuierlich wiederholt werden.

## Beschreibung

Die Erfindung betrifft ein Verfahren zur automatischen Vermessung und Steuerung einer Vortriebsvorrichtung bei Tunnelbauten u. dgl. gemäß dem Oberbegriff des Anspruchs 1 sowie eine zur Durchführung dieses Verfahrens vorgesehene Vorrichtung gemäß dem Oberbegriff des Anspruchs 7.

Im heutigen Tunnel- oder Kanalbau werden häufig Schildvortriebsvorrichtungen eingesetzt, mit denen Betonrohrfertigabschnitte im Rohrvortriebsverfahren von einem sog. Vorpreßschacht (Startschacht) aus über Strecken von mehreren 100 m bis über 1000 m zum Zielpunkt (Zielschacht) am Ende der Vortriebsstrecke unterirdisch vorgetrieben werden. Um die vorgegebene, meist kurvenförmige Steckenführung möglichst genau einzuhalten, kommt es entscheidend darauf an, die Vermessung, d.h. die Lagebestimmung der Vortriebsvorrichtung während des Vortriebs mit hoher Präzision durchzuführen und bei unerwünschten Lageabweichungen so schnell wie möglich die erforderlichen Gegensteuerungsmaßnahmen vorzunehmen.

In diesem Zusammenhang ist es bekannt, die Vermessung von Rohrvortrieben vorn Startschacht aus mittels eines geodätischen Meßgerätes, beispielsweise mittels eines Theodoliten oder mittels eines Laserstrahlmeßgerätes, innerhalb der Vortriebsstrecke in Intervallen, d.h. in Vortriebspausen, durchzuführen. Hierbei wird die Lage der Rohrachse eingemessen, wobei die erzielten Meßergebnisse die Vorgabe für die weitere Rohrsteuerung bilden.

Ein gravierender Nachteil bei diesem bekannten Verfahren ist darin zu sehen, daß die Vermessung nur in Vortriebspausen erfolgen kann, was die Wirtschaftlichkeit des Rohrvortriebsverfahrens stark beeinträchtigt. Weiterhin können zwischen zwei Messungen Fehlsteuerungen eintreten, die erst relativ spät, d.h. erst nach der folgenden Messung, erkannt und korrigiert werden können. Hinzu kommt außerdem, daß aufgrund der räumlichen Bewegung eines sich im Vortrieb befindlichen gesamten Rohrstranges die Meßpunkte in der Vortriebsstrecke für jede Messung praktisch neu justiert werden müssen. Es muß also jedesmal eine neue Nullmessung zum Bezugspunkt bzw. zum Ausgangspunkt im Startschacht durchgeführt werden. Erst nachdem die Meßpunkte innerhalb der Strecke auf diese Weise mit entsprechendem Zeitaufwand und entsprechenden Stillstandspausen einjustiert worden sind, kann mit hinlänglicher Sicherheit die eigentliche Intervallmessung durchgeführt werden. Auch die Justierung als solche kann jedoch wieder mit Fehlern behaftet sein.

Diese Art der Vermessung ist daher nur bei geraden Rohrachsen und begrenzter Länge von maximal einigen 100 m wirtschaftlich durchführbar.

Bei einem weiteren bekannten Verfahren der gattungsgemäßen Art (DE-PS 37 33 553) ist vorgesehen, zwischen einem motorisierten Theodolit, der in einem ausgebauten Tunnelabschnitt hinter der Vortriebsmaschine angeordnet ist, und einem Zielreflektor an der Rückseite der Vortriebsmaschine eine Meßstrecke von bis zu 100 m zu installieren. Mit Hilfe dieser jeweils der Vortriebsmaschine nachgeschalteten Meßstrecke werden Meßdaten ermittelt, auf deren Basis dann über einen elektronischen Rechner Steuerdaten für den Vortrieb direkt berechnet und an die Schildvortriebsmaschine weitergegeben werden. Mit diesem bekannten Verfahren kann jedoch die fortlaufende Steuerung der Vortriebsvorrichtung mittels der aus der Vermessung gewonnenen Werte nur solange erfolgen, als der vom Laserstrahlgerät ausgesandte Laserstrahl innerhalb der ausgebauten Tunnelstrecke in gerader Linie bis zum Zielreflektor an der Rückseite der Schildvortriebsvorrichtung geleitet werden kann. Bei gekrümmten Tunnelstrecken müssen daher häufige Vortriebspausen eingelegt werden, um das Laserstrahlgerät neu zu positionieren. Somit ist ein kontinuierlicher Betrieb der Schildvortriebsmaschine nicht möglich.

Der Erfindung liegt daher die Aufgabe zugrunde, zur Beseitigung der geschilderten Nachteile das Verfahren der gattungsgemäßen Art derart weiterzubilden, daß die Vermessung der Tunnelstrecke unabhängig von deren Verlauf, d.h. insbesondere auch bei kurvenförmigen Tunnelstrecken, kontinuierlich durchgeführt und der Rohrvortrieb ohne Stillstandszeiten mit hoher Genauigkeit vorgenommen werden kann. Außerdem soll eine vorteilhafte Vorrichtung zur Durchführung dieses Verfahrens geschaffen werden.

Diese Aufgabe wird durch die Erfindung mit dem Verfahren gemäß Anspruch 1 gelöst. Vorteilhafte Ausgestaltungen hiervon sind in den Ansprüchen 2 - 6 beschrieben.

Die zur Durchführung des erfindungsgemäßen Verfahrens geschaffene Vorrichtung ergibt sich aus Anspruch 7. Vorteilhafte Ausführungsformen hiervon sind in den weiteren Ansprüchen beschrieben.

Bei dem erfindungsgemäßen Verfahren wird derart vorgegangen, daß die Meßstrecke zwischen der Ausgangsmeßstation und dem Zielpunkt durch Anordnung wenigstens einer Zwischenmeßstation in mehrere geradlinige Meßabschnitte unterteilt wird; hierdurch wird ein durchgehender Meßpolygonzug gebildet, entlang dem der Meßstrahl zur kontinuierlichen Erfassung sämtlicher Lagedaten aller Stationen einschl. der Abstandsdaten von der Ausgangsmeßstation über die Zwischenmeßstation(en) zum Zielpunkt geleitet und von dort wieder zur Ausgangsmeßstation reflektiert wird, so daß sämtliche erfaßten Ist-Daten in der zentralen Rechenanlage als Basis für die Ermittlung der Steuersignale an die Vortriebsvorrichtung dienen. Wesentlich bei der Erfindung ist weiterhin, daß während des laufenden Vortriebs die vorerwähnten Verfahrensschritte kontinuierlich wiederholt werden.

Bei der Erfindung wird daher die Vermessung von Rohrvortrieben mit für das Meßsystem beliebiger Länge bei vorgegebenem Achsverlauf nach Höhe und Seite in jedem Punkt der Rohrstrecke vom Startschacht bis zum Zielschacht einer solchen Vortriebsstrecke kontinuierlich, sich selbst kontrollierend und korrigierend, mit automatischer Aufnahme und Auswertung der Meßergebnisse, ohne Rücksicht auf den jeweiligen Betriebszustand (Vorschub oder Stillstand) vorgenommen. Dies erfolgt derart, daß unmittelbar die Steuerung des Vortriebsschildes von den Meßergebnissen, d.h. von dem permanenten Datenfluß, gesteuert wird.

Der Erfindung liegt somit der wesentliche Gedanke zugrunde, die vorzutreibende Rohrstrecke vom Anfangspunkt (Startschacht) aus in ihrer jeweiligen Länge bis zum Steuerschild der Vortriebsvorrichtung in soviel - geradlinige - Meßabschnitte zu unterteilen, als notwendig sind, um den Meßstrahl als durchgehenden Meßpolygonzug vom Startschacht aus bis zum jeweiligen Standort des Steuerschildes zu leiten und diesen Meßstrahl sodann vom Steuerstand des Vortriebsschildes zum Startschacht zu reflektieren.

Die Auswertung eines derart verlaufenden Meßstrahls mit seiner gleichzeitigen Reflektierung, d.h. Rücklauf, erfolgt über die Aufnahme aller ermittelter Meßdaten an den jeweiligen Zwischenmeßstationen. Dadurch, daß sämtliche Zwischenmeßstationen einschl. der im Startschacht angeordneten Ausgangsmeßstation miteinander verkabelt und mit der als Steuereinheit dienenden zentralen elektronischen Rechenanlage verbunden sind, können sämtliche erfaßten Meßdaten unmittelbar an diese Rechenanlage weitergegeben und in dieser für die sofortige Datenauswertung sowie Berechnung entsprechender Steuersignale für die Vortriebsvorrichtung verarbeitet werden.

Eine derart vorgetriebene Rohrstrecke besteht vorzugsweise aus einzelnen Betonrohrfertigteilen, die ihren Verbund nur über den in Rohrachse gerichteten Anpreßdruck sowie durch den umgebenden Bodendruck als erforderliche Bettung für die Achshaltigkeit jedes einzelnen Rohres erhalten und einer permanenten räumlichen Bewegung unterliegen. Diese Bewegung kann am Rohrmantel auch als jeweilig vor- oder zurückdrehende Schraubenbewegung (Verollbewegung) auftreten. Es unterliegen daher auch sämtliche der erfindungsgemäßen Zwischenmeßstationen, die im mobilen Rohrstrang angeordnet sind, einer durch solche Verrollbewegungen bewirkten permanenten Abweichung von der Null-Lage. Dies gilt auch für den an der Rückseite der Vortriebsvorrichtung angeordneten Zielpunkt.

Hier sieht jedoch die Erfindung eine Abhilfe in Form einer entsprechenden Verrollkorrektur der einzelnen Zwischenmeßstationen vor, indem sämtliche Meßpunkte bzw. Meßgeräte automatisch, vorzugsweise mechanisch oder mittels Motorkraft oder durch Magneteinwirkung, nivelliert werden. Es werden daher erfindungsgemäß sämtliche Meß- und Zwischenmeßpunkte selbsttätig zu jedem Zeitpunkt, d.h. nach jeder sich etwa ergebenden Lageänderung aufgrund etwa auftretender Bewegungen, unabhängig von der Bewegungsrichtung in die Normlage justiert.

Die Erfindung erbringt den wesentlichen wirtschaftlichen Vorteil, daß sämtliche Vermessungsarbeiten kontinuierlich, d.h. zu jeder Zeit, also sowohl in den eigentlichen Vortriebszeiten (Betriebszeiten) als auch in den Stillstandszeiten, durchgeführt werden. Somit muß beim eigentlichen Betrieb keinerlei Rücksicht auf die Vermessungsarbeiten genommen werden. Allein dadurch ergibt sich schon eine Einsparung von bis zu mehreren Vortriebsstunden/Arbeitstag, was insbesondere bei langen und gekrümmten Rohrvortriebsstrecken gilt.

Ein weiterer Vorteil der Erfindung besteht in der Sicherheit für die planmäßige Lage der Rohrtrasse infolge der unmittelbaren Übertragung der Meßwerte in die Steuerung des Vortriebsschildes.

Bei der Durchführung des erfindungsgemäßen Verfahrens wird im einzelnen derart vorgegangen, daß die Lageparameter der Ausgangsmeßstation über Festpunkte außerhalb der Vortriebsstrecke eingemessen bzw. ermittelt werden. Darauf werden dann die Lageparameter einschl. des Abstandes der jeweils folgenden Zwischenmeßstation durch entsprechendes Messen im sog. Vorblick und Rückblick (Reflektion) zwischen der vorhergehenden Station und der betreffenden Station ermittelt.

Eine besondere Meßsicherheit ergibt sich, wenn dann außerdem noch, wie erfindungsgemäß möglich, die Lageparameter einschl. des Abstandes der jeweils folgenden Zwischenmeßstation durch entsprechendes Messen in der ersten und zweiten Lage des Meßkopfes der vorhergehenden Station ermittelt werden.

Es liegt im Rahmen der Erfindung, daß der Meßstrahl erst dann zur nächsten Zwischenmeßstation bzw. zum Zielpunkt geleitet wird, wenn zuvor ein Abgleich der Meßdaten zwischen zwei vorhergehenden Stationen durchgeführt worden ist.

Wie schon dargelegt, lassen sich mit der Erfindung die bei einem Rohrvortrieb auftretenden unvermeidbaren Verrollbewegungen mit Vorteil dadurch ausgleichen bzw. unschädlich machen, daß jede der im mobilen Rohrstrang angeordneten Zwischenmeßstationen unabhängig von der jeweiligen Verrollage des Rohrstranges selbsttätig nivelliert wird. Dies erfolgt vorzugsweise mittels einer entsprechenden Nivelliereinrichtung, die beispielsweise ein selbsthorizontierender Dreifuß sein kann, auf dem das betreffende Zwischenmeßgerät befestigt ist.

Es ist von Vorteil, wenn jedes Meßgerät bzw. Zwischenmeßgerät als selbständig arbeitendes Meßgerät ausgebildet ist, das zu den anderen Geräten funktionsäquivalent ist. Ein derartiges Meßgerät kann ein motorisierter Theodolit sein, der im Handel, beispielsweise unter der Bezeichnung "Geodimeter System 4000", erhältlich ist.

Die zur Durchführung des beschriebenen Verfahrens vorgesehene Vorrichtung gemäß der Erfindung ist derart ausgestaltet, daß zwischen dem Ausgangsmeßgerät und dem Zielpunkt in der Meßstrecke wenigstens ein Zwischenmeßgerät angeordnet ist, das zusammen mit dem Ausgangsmeßgerät und dem Zielpunkt einen durchgehenden Meßpolygonzug bildet.

Sämtliche der erfaßten Meßdaten werden in einer zentralen elektronischen Rechenanlage verarbeitet. In dieser wird die räumliche Ist-Lage der Vortriebsvorrichtung erfaßt und mit der abgespeicherten räumlichen Soll-Lage der Vortriebsvorrichtung verglichen, worauf in Abhängigkeit von der jeweiligen Abweichung entsprechende Steuersignale an die Vortriebsvorrichtung zur Korrektur von deren Lageparameter abgegeben werden.

Das entsprechende Programm zum Betrieb des Meßsystems und der elektronischen Rechenanlage ist gleichfalls im Handel erhältlich, und zwar von der Firma TUMA GmbH, D-49762 Lathen.

Die Erfindung wird im folgenden anhand der Zeichnung näher erläutert. Diese zeigt in:
- Fig. 1: schematisch den Verlauf einer als Abwasserkanal zu verwendenden Rohrstrecke, die unterirdisch unter bebautem Gebiet von einem Startschacht bis zu einem Zielschacht vorgetrieben worden ist;
- Fig. 2: schematisch eine Vortriebsanordnung zur Herstellung einer Rohrleitung und
- Fig. 3: schematisch das Verfahren bzw. die Vorrichtung gemäß der Erfindung in Anwendung bei einer mehrfach gekrümmten Rohrvortriebsstrecke.

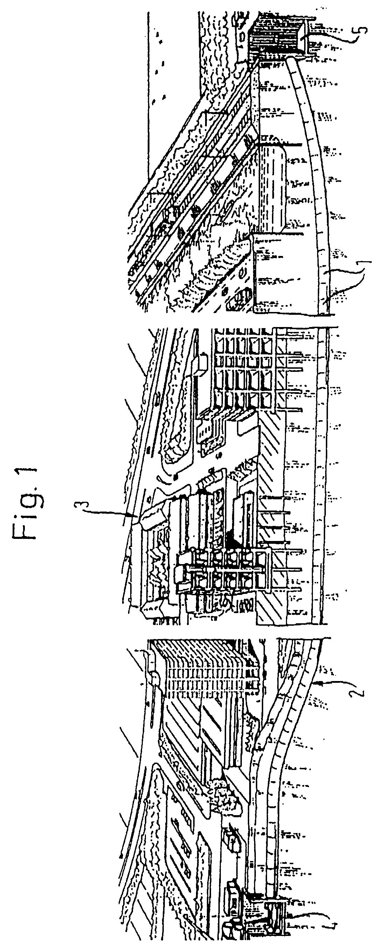

Wie aus der Zeichnung, insbes. aus Fig. 1, ersichtlich, gelangt das Vortriebsverfahren zur Herstellung von unterirdischen Kanal- oder Tunnelstrecken zur Anwendung, wobei im dargestellten Ausführungsbeispiel ein aus aneinandergereihten Betonrohrfertigteilen 1 gebildeter Rohrstrang 2 in gekrümmtem Verlauf unterhalb von bebautem Gebiet 3 im sog. Rohrvortriebsverfahren verlegt wurde. Hierbei wird das Vortriebsverfahren von einem Startschacht 4 (Vorpreßschacht) zu einem Zielschacht 5 durchgeführt.

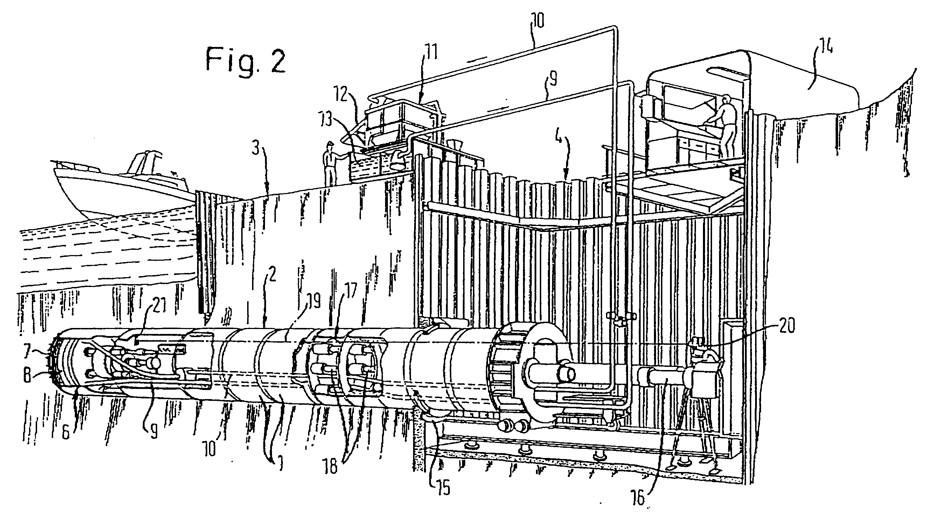

Wie deutlich aus Fig. 2 ersichtlich, gelangt eine entsprechende Vortriebsvorrichtung 6 zur Anwendung. Diese wird hydraulisch angetrieben sowie gesteuert und weist ein sich drehendes Schneidrad 7 auf. Durch dieses wird im jeweiligen Abbauraum der Boden an der Ortsbrust abgefräst und in eine Mischkammer 8 verbracht. Diese Mischkammer 8 wird durch eine von übertage kommende Zuleitung 9 ständig mit Suspension gefüllt.

Der Abbauraum und die Mischkammer 8 sind über eine verschließbare, in der Größe verstellbare Durchtrittsöffnung verbunden. In der Mischkammer 8 werden der abgebaute Boden und die über die Zuleitung 9 zugeführte, als Transportflüssigkeit dienende Suspension vermischt und durch eine Entsorgungsleitung 10 zu einer Separationsanlage 11 gepumpt.

In dieser Separationsanlage 11 wird das Grobkorn von der Transportflüssigkeit getrennt und über ein Vibrationssieb 12 entsorgt. Demgegenüber wird das Feinkorn in Absetzbecken 13 separiert, damit die gesäuberte Transportflüssigkeit als Suspension wiederverwendet werden kann.

Von einer Bauleitzentrale 14 aus wird der gesamte Arbeitsprozeß, beispielsweise über Videoanlagen, überwacht.

Eine wasserdicht ausgebildete sog. Brillenwand 15 verhindert das Eindringen von Grundwasser und Boden aus der Vortriebsstrecke in den als Startschacht dienenden Vorpreßschacht 4.

Die einzelnen Vortriebsrohre 1, die nacheinander aneinandergereiht werden und somit später insgesamt den Rohrstrang 2, beispielsweise zur Funktion als Abwasserkanal, bilden, werden von teleskopierbaren Hydraulikpressen 16 in den Boden gedrückt. Bei längeren Vortriebsstrecken werden Zwischenpreßstationen 17 eingesetzt, die mit kleinen Hydraulikpressen 18 gleicher Gesamtdruckkraft bestückt sind.

Die jeweilige räumliche Ist-Lage des Schneidrades 7 der Vortriebsvorrichtung 6 wird mittels eines Meßstrahls 19 erfaßt, der von einem als Ausgangsmeßstation dienenden geodätischen Meßgerät 20 in Form eines motorisierten Theodolites, ausgesandt wird. Dieser ausgesandte Meßstrahl 19 wird von einem als Zielpunkt dienenden Zielreflektor 21, der an der Rückseite der Vortriebsvorrichtung 6 angeordnet ist, reflektiert, so daß dadurch die erfaßten Meßdaten betreffend die räumliche Ist-Lage der Vortriebsvorrichtung 6 in einer nicht näher dargestellten elektronischen Rechenanlage mit der abgespeicherten räumlichen Soll-Lage der Vortriebsvorrichtung 6 verglichen werden können. In Abhängigkeit von der jeweiligen Abweichung werden sodann entsprechende Steuersignale an die Vortriebsvorrichtung 6 zur Korrektur von deren Lageparameter abgegeben.

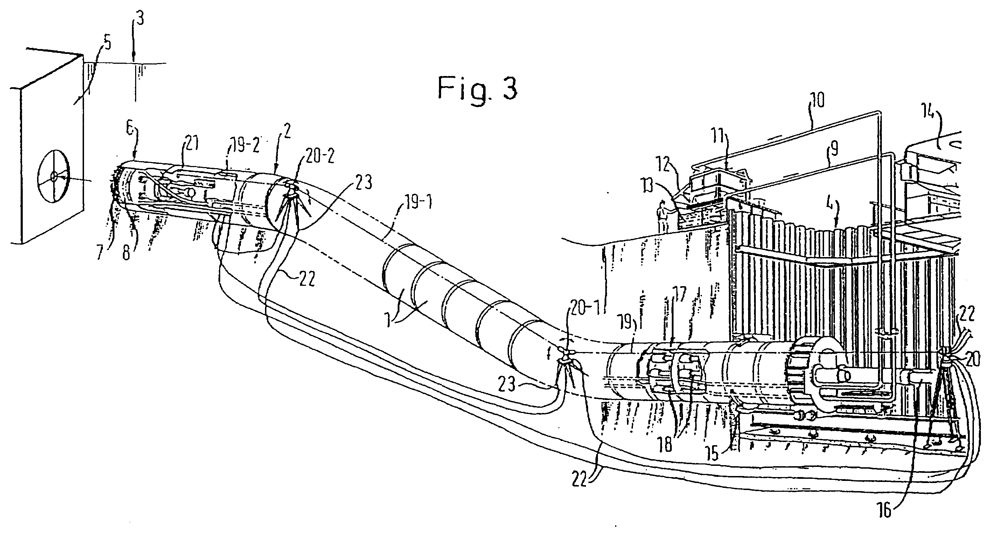

Insbesondere bei längeren sowie auch bei mehrfach in verschiedenen Richtungen gekrümmten Vortriebsstrecken, insbesondere Rohrvortriebsstrecken, ist die Anordnung derart getroffen, daß, wie aus Fig. 3 ersichtlich, die Meßstrecke zwischen der Ausgangsmeßstation 20 und dem Zielreflektor 21 in mehrere geradlinige Meßabschnitte unterteilt ist. Dies erfolgt beim dargestellten Ausführungsbeispiel durch Anordnung von zwei Zwischenmeßstationen 20-1, 20-2 im Rohrstrang 2. Hierdurch wird ein durchgehender Meßpolygonzug 19, 19-1, 19-2 gebildet, entlang dem der Meßstrahl 19 zur kontinuierlichen Erfassung sämtlicher Lagedaten aller Stationen 20, 20-1, 20-2 einschl. der Abstandsdaten von der Ausgangsmeßstation 20 über die Zwischenmeßstationen 20-1, 20-2 zum Zielpunkt 21 geleitet und von dort wieder zur Ausgangsmeßstation 20 reflektiert wird. Hierbei dienen sämtliche erfaßten Ist-Daten in der zentralen Rechenanlage als Basis für die Ermittlung der Steuersignale an die Vortriebsvorrichtung 6.

Wie dargestellt, sind sämtliche Meßstationen 20, 20-1, 20-2 über entsprechende Leitungen 22 miteinander verkabelt, um dadurch die Daten in der erforderlichen Weise übertragen zu können.

Zum Ausgleich der sich im Rohrstrang 2 in den einzelnen Betonrohrfertigteilen 1 ergebenden Verrollbewegung weist jede Zwischenmeßstation 20-1, 20-2, die als selbständig arbeitondes Meßgerät ausgebildet und zu den anderen Geräten funktionsäquivalent ist, eine Nivelliereinrichtung 23 auf, mittels der jede der im mobilen Rohrstrang 2 angeordneten Zwischenmeßstationen 20-1, 20-2 unabhängig von der jeweiligen Verrollage des Rohrstrangs 2 selbsttätig nivelliert wird. Diese Nivelliereinrichtung 23 besteht beim dargestellten Ausführungsbeispiel jeweils aus einem selbsthorizontierenden Dreifuß, so daß eine ständige Korrektur der Lage der betreffenden Zwischenmeßstation gewährleistet ist.

Bei der Durchführung des beschriebenen Verfahrens bzw. beim Betrieb der beschriebenen Vorrichtung zur automatischen Vermessung und Steuerung der Vortriebsvorrichtung 6 wird derart vorgegangen, daß das ortsfest angeordnete Ausgangsmeßgerät 20, nachdem seine Lageparameter über außerhalb der Vortriebsstrecke liegende, beispielsweise im Startschacht 4 angeordnete Festpunkte eingemessen bzw. ermittelt wurden, den Meßstrahl 19 zu dem im mobilen Rohrstrang 2 angeordneten ersten Zwischenmeßgerät 20-1 aussendet. Hierdurch bzw. durch entsprechende Reflektion dieses Meßstrahls 19 werden die Lageparameter einschl. des Abstandes der ersten Zwischenmeßstation 20-1 ermittelt (Vorblick-Vorgang). Zur Absicherung der derart erfaßten Meßwerte erfolgt außerdem noch ein Rückblick-Vorgang, indem ein entsprechender Meßvorgang von der ersten Zwischenmeßstation 20-1 zum Ausgangsmeßgerät 20, d.h. also im Rückblick, durchgeführt wird.

Außerdem erfolgt ein weiterer Meßvorgang dadurch, daß die Lageparameter einschl. des Abstandes der Zwischenmeßstation 20-1 durch entsprechendes Messen in der 1. und 2. Lage des Meßkopfes der vorhergehenden Station, im vorliegenden Fall also des Ausgangsmeßgerätes 20, ermittelt werden.

Erst dann, wenn die erfaßten Meßdaten zwischen den beiden Meßstationen 20 und 20-1 entsprechend abgeglichen worden sind, wird der Meßstrahl zur nächsten Station geleitet, d.h. also im vorliegenden Fall, daß dann erst von der ersten Zwischenmeßstation 20-1 der Meßstrahl 19-1 zur zweiten Zwischenmeßstation 20-2 geleitet bzw. reflektiert wird. Auf dieser Zwischenmeßstrecke wird der Meßvorgang in einer der zuvor beschriebenen Art entsprechenden Weise wiederholt, worauf dann nach einem Abgleich sämtlicher erfaßten Meßdaten der Meßstrahl 19-2 von der zweiten Zwischenmeßstation 20-2 zum Zielreflektor 21 geleitet bzw. von dort reflektiert wird. Sämtliche erfaßten Daten werden über die Leitungen 22 zu der zentralen elektronischen Rechenanlage geleitet und dort in der bereits beschriebenen Weise zur Ermittlung der Steuersignale für die Vortriebsvorrichtung 6 ausgewertet.

Hinsichtlich vorstehend im einzelnen nicht näher erläuterter Merkmale der Erfindung wird ausdrücklich auf die Zeichnung sowie auf die Ansprüche verwiesen.

## Patentansprüche

1. Verfahren zur automatischen Vermessung und Steuerung einer Vortriebsvorrichtung bei Tunnelbauten u. dgl., insbesondere im Rohrvortrieb, bei dem die räumliche Ist-Lage der Vortriebsvorrichtung (6) mittels eines Meßstrahls (19), der von einem als Ausgangsmeßstation (20) dienenden geodätischen Meßgerät ausgesandt und von einem als Zielpunkt (21 dienenden Zielreflektor an der Rückseite der Vortriebsvorrichtung (6) reflektiert wird, erfaßt und in einer elektronischen Rechenanlage mit der abgespeicherten räumlichen Soll-Lage der Vortriebsvorrichtung (6) verglichen wird, worauf in Abhängigkeit von der jeweiligen Abweichung entsprechende Steuersignale an die Vortriebsvorrichtung (6) zur Korrektur von deren Lageparameter abgegeben werden,
**dadurch gekennzeichnet,**
daß die Meßstrecke zwischen Ausgangsmeßstation (20) und Zielpunkt (21) durch Anordnung wenigstens einer Zwischenmeßstation (20-1, 20-2) in mehrere geradlinige Meßabschnitte unterteilt wird, um dadurch einen durchgehenden Meßpolygonzug (19, 19-1, 19-2) zu bilden, entlang dem der Meßstrahl zur kontinuierlichen Erfassung sämtlicher Lagedaten aller Stationen einschl. der Abstandsdaten von der Ausgangsmeßstation (20) über die Zwischenmeßstation(en) (20-1, 20-2) zum Zielpunkt (21) geleitet und von dort wieder zur Ausgangsmeßstation (20) reflektiert wird, so daß sämtliche erfaßten Ist-Daten in der zentralen Rechenanlage als Basis für die Ermittlung der Steuersignale an die Vortriebsvorrichtung (6) dienen, und daß während des laufenden Vortriebs die vorerwähnten Verfahrensschritte kontinuierlich wiederholt werden.

2. Verfahren nach Anspruch 1, dadurch gekennzeichnet, daß die Lageparameter der Ausgangsmeßstation (20) über Festpunkte außerhalb der Vortriebsstrecke eingemessen bzw. ermittelt werden.

3. Verfahren nach Anspruch 1 oder 2, dadurch gekennzeichnet, daß die Lageparameter einschl. des Abstandes der jeweils folgenden Zwischenmeßstation (20-1, 20-2) durch entsprechendes Messen im Vorblick und Rückblick zwischen der vorhergehenden Station und der betreffenden Station ermittelt werden.

4. Verfahren nach einem der Ansprüche 1 - 3, dadurch gekennzeichnet, daß die Lageparameter einschl. des Abstandes der jeweils folgenden Zwischenmeßstation (20-1, 20-2) durch entsprechendes Messen in der 1. und 2. Lage des Meßkopfes der vorhergehenden Station ermittelt werden.

5. Verfahren nach einem der Ansprüche 1 - 4, dadurch gekennzeichnet, daß erst nach einem Abgleich der Meßdaten zwischen zwei vorhergehenden Stationen der Meßstrahl (19) zur nächsten Zwischenmeßstation (20-1, 20-2) bzw. zum Zielpunkt (21) geleitet wird.

6. Verfahren nach einem der Ansprüche 1 - 5, dadurch gekennzeichnet, daß jede der im mobilen Rohrstrang (2) angeordneten Zwischenmeßstationen (20-1, 20-2) unabhängig von der jeweiligen Verroll-Lage des Rohrstranges (2) selbsttätig nivelliert wird.

7. Vorrichtung zur Durchführung des Verfahrens nach einem der Ansprüche 1 - 6, mit einem am Anfang einer Vortriebsstrecke angeordneten geodätischen Ausgangsmeßgerät (20) zur Aussendung eines Meßstrahls (19) zu einem als Zielpunkt (21) dienenden Zielreflektor an der Rückseite einer Vortriebsvorrichtung (6),
**dadurch gekennzeichnet,**
daß zwischen dem Ausgangsmeßgerät (20) und dem Zielpunkt (21) wenigstens ein Zwischenmeßgerät (20-1, 20-2) angeordnet ist, das zusammen mit dem Ausgangsmeßgerät (20) und dem Zielpunkt (21) einen durchgehenden Meßpolygonzug (19, 19-1, 19-2) bildet.

8. Vorrichtung nach Anspruch 7, dadurch gekennzeichnet, daß jedes Meßgerät (20, 20-1, 20-2) als selbständig arbeitendes Meßgerät ausgebildet ist, das zu den anderen Geräten funktionsäquivalent ist.

9. Vorrichtung nach Anspruch 7 oder 8, dadurch gekennzeichnet, daß jedes Meßgerät (20, 20-1, 20-2) ein motorisierter Theodolit ist.

10. Vorrichtung nach einem der Ansprüche 7 - 9, dadurch gekennzeichnet, daß jedes Zwischenmeßgerät (20-1, 20-2) mit einer Nivelliereinrichtung (23) verbunden ist.

11. Vorrichtung nach Anspruch 10, dadurch gekennzeichnet, daß die Nivelliereinrichtung (23) ein selbsthorizontierender Dreifuß ist, auf dem das betreffende Zwischenmeßgerät (20-1, 20-2) befestigt ist.
